Europäisches Patentamt

**European Patent Office**

**Office européen des brevets**

(19)

(11) Publication number: **0 243 973**

**A2**

(12)

# EUROPEAN PATENT APPLICATION

(21) Application number: **87106300.4**

(22) Date of filing: **30.04.87**

(51) Int. Cl.³: **G 11 B 5/10**
**G 11 B 33/12**

(30) Priority: **01.05.86 US 858009**

(43) Date of publication of application:
**04.11.87 Bulletin 87/45**

(84) Designated Contracting States:
**DE FR GB NL**

(71) Applicant: **POLAROID CORPORATION**
**549 Technology Square**
**Cambridge, Massachusetts 02139(US)**

(72) Inventor: **Cocco, Vincent L.**
**2 Jennifer Road**
**Wakefield, MA 01880(US)**

(74) Representative: **Koch, Günther, Dipl.-Ing. et al,**
**Kaufingerstrasse 8**
**D-8000 München 2(DE)**

(54) **Compact disk drive.**

(57) A compact disk drive is provided with a head positioning system wherein the head and its drive motor are located on opposite sides of the disk spindle to maximize the separation therebetween within the confines of a small volume drive package to reduce the potential of motor noise interferring with the recording processes. The volume of the drive package is also reduced by using a single common flux return path and magnetic shielding plate for both the head positioning and spindle drive motors.

EP 0 243 973 A2

./...

Croydon Printing Company Ltd.

FIG. 2

Title:  COMPACT DISK DRIVE

## BACKGROUND OF THE INVENTION

The present invention relates to the field of disk drives for recording and/or reading data signals and, more specifically, to a compact disk drive which is capable of high density recording, simple and economical in its construction, and of a physical size that makes it suitable for incorporation into portable or hand-held apparatus such as an electronic still image camera or a very small computer system

In recent years, improvements in recording media, read/write transducer technology, drive motors, and head positioning devices have given rise to disk drive systems wherein dramatic increases in recording density have been accompanied by equally impressive reductions in the physical size of the drives.  For example, commercially available double sided 3 1/2 inch flexible magnetic disk drive systems now can store approximately 1.5 megabytes of digital information on a single disk.

However, to accommodate the small size of a hand-held electronic imaging camera or very small rugged computers that are needed for a variety of industrial applications there is a pressing need for even smaller disk drives that are capable of high recording density performance.  Also, because of the large amount of data involved in defining a pictorial or graphic image, it is desirable that such compact drives provide a substantial increase in the data transfer rate which means higher diskspeeds. As an indication of desired size reduction, it has been proposed that electronic still image cameras adopt a standardized data recording format that utilizes a flexible 47mm diameter magnetic disk for storing 50 images.

Major mechanical and electro-mechanical components of a disk drive include a frame or support structure for mounting various components in operative relation to one another, a rotatable spindle for receiving and supporting a disk, an electromagnetic motor for rotatably driving the spindle and a head mounting and positioning assembly. The head assembly typically comprises a carriage mounting a read/write head or transducer for radial movement relative to a disk on the spindle to position the head over a selected one of a plurality of concentric or spiral recording tracks and an actuator assembly for reciprocally moving the carriage along its radial path of travel.

There are a variety of different types of actuator assemblies employed in disk drives and each generally includes an electromagnetic motor. For example one type employs a lead screw or flexible metal band that is driven by a stepper motor to advance or retract the head carriage. For a representative example of stepper motor actuators, see U.S. Patent Nos. 4,359,763 and 4,445,155.

Another type of actuator assembly employs a voice coil type of linear actuator motor for driving the head carriage, representative examples of which are disclosed in U.S. Patent Nos. 4,136,293; 4,144,466; and 4,528,497.

It is also known in the prior art to employ a lower profile linear actuator motor in the head positioning system wherein the motor includes permanent magnets held in a fixed support for providing a magnetic field for an adjacent slidable bobbin or armature having a current carrying coil mounted thereon. For representative examples of this type of linear motor, see U.S. Patent Nos. 4,407,578; and 4,450,493.

To achieve compactness, disk drives known in the art generally have the spindle mounted vertically in a rectangular or square support frame and drive it from the bottom end with a flat circular direct drive motor having its rotor disposed in a horizontal plane. The entire head actuator assembly is typically mounted to one side of the spindle along an outer edge or in a corner of the frame for advancing the head on the interior end of the carriage toward and away from the spindle. For representative examples, see previously noted U.S. Patent Nos. 4,359,763; and 4,445,155.

One very important consideration in the design of a disk drive is to ensure that the magnetic field interactions at the head/medium interface are not disrupted or interfered with by strong magnetic fields emanating from other sources such as the electromagnetic spindle drive and head positioning motors.

One way of preventing magnetic interference from the motors is to build magnetic shielding components into the motor construction. Typically, outermost components of the motors such as the motor housing or backing plates are formed of magnetic permeable material which serves as a shield and many times defines a portion of a flux return path in the motor's magnetic circuit. Another way of prevention has been the provision of adequate physical spacing between the head and motors such that any stray fields from the motors, not suppressed by the shielding, are of such reduced strength in the vicinity of the head/medium interface that they do not have the potential for interference.

In order significantly to reduce the size of a disk drive which is designed to accept relatively small

0243973

disks (e.g. a 47mm disk), the essential components of the
drive must necessarily be accommodated in a smaller space
which reduces the physical spacing between the head and
the head positioning and spindle drive motors and thus
increases the possibility of interference if conventional
drive packaging techniques are employed.  Also, as drive
volume is reduced, the amount of material used for motor
shielding becomes a significant determinant of the shape
and form of the drive.

Therefore it is a primary object of the present
invention to provide a compact disk drive of novel construction which allows the head to be remotely spaced
from other magnetic field sources in the drive to prevent
interference therefrom while minimizing the volume of the
drive structure.

Another object is to provide such a drive which
achieves compactness by reducing the amount of material
needed to shield both the spindle drive and head positioning motors.

Yet another object is to provide such a disk
drive that is simple and economical in its contruction.

It is also an object of the invention to provide a compact disk drive that is suitable for incorporation into small hand-held or portable apparatus such as
an electronic still image camera or a small computer
system.

SUMMARY OF THE INVENTION

The present invention provides a compact disk
drive having a novel configuration which reduces its
volume and arranges its components to minimize magnetic
field interaction between its recording transducer and
electromagnetic motors for spinning the disk and moving
the transducer relative thereto.

The drive embodying the present invention
includes means for supporting various drive components

-4-

including a spindle mounted thereon for spinning a disk in engagement therewith about an axis.

The transducer, which may include a magnetic or optical read and/or write head, is configured to be moved in a direction substantially perpendicular to the axis along a path of travel extending radially with respect to the disk.

Drive means, including an electromagnetic motor (e.g. a linear motor), is provided for driving the transducer along its radial path of travel. The drive means are mounted on the supporting means off to one side of the spindle.

The drive means is connected in driving relation to the transducer by means such as a carriage which is configured to locate the transducer diameterically opposite the drive means on the other side of the spindle where the transducer is remote from the motor to minimize interference from magnetic fields emanating from the motor. In a preferred embodiment, the carriage bridges the spindle mounting area and includes an elongated opening therein which allows the spindle to project up through the carriage without inhibiting carriage movement.

In addition to the first motor for driving the transducer along its radial path of travel, the drive also includes a second electromagnetic motor which is coupled to the spindle for rotatably driving a disk in engagement therewith.

To shield the transducer from magnetic fields emanating from both motors it is desirable to construct the motors with certain magnetically permeable members which effect shielding and also define at least portions of flux return paths in the magnetic circuits associated with each motor.

The disk drive embodying the present invention achieves at least part of its compactness by constructing and arranging the two motors in a cooperative manner whereby they share a common single magnetically permeable member for shielding and flux return purposes.

BRIEF DESCRIPTION OF THE DRAWINGS

For a fuller understanding of the nature and objects of the present invention, reference may be had to the following detailed description taken in connection with the accompanying drawing wherein:

FIG. 1 is a perspective view of a compact disk drive embodying the present invention;

FIG. 2 is a perspective view of the components of the drive of FIG. 1 shown in exploded fashion;

FIG. 3 is an elevational view of the drive, partly in section, taken along line 3-3 of FIG. 1; and

FIG. 4 is a plan view of a head mounting carriage located in its operative position on a support frame structure.

DESCRIPTION OF THE PREFERRED EMBODIMENT

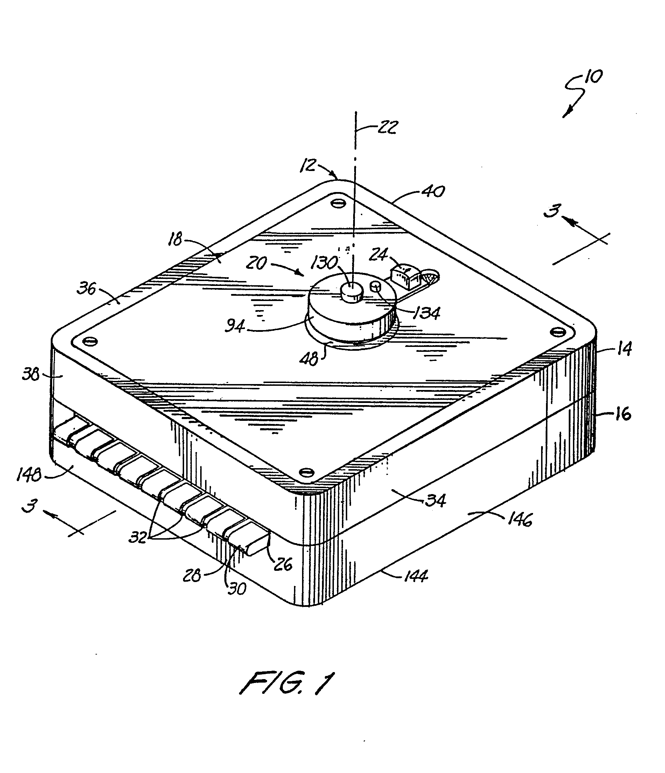

With reference to FIG. 1, the present invention provides a compact disc drive 10 suitable for use with relatively small diameter (e.g. 47MM) flexible magnetic recording disks or other types of disks including optical and magneto-optical disks. Drive 10 includes a generally box-like housing 12 defined by superposed upper and lower housing sections 14 and 16 and a cover plate 18 mounted on top of upper section 14. In the illustrated embodiment, the housing 12 has a substantially square horizontal cross section, but, alternatively, it could be rectangular.

The term compact herein means that the housing 12 has dimensions (LxWxD) of less than about 7.5x7.5x2.5 cm. The illustrated drive 10, for example, preferably measures about 5.4x5.4x1.6 cm.

Projecting outwardly from cover plate 18, through openings therein, is a rotatably mounted spindle 20 for rotating a disk in engagement therewith about a spindle axis 22; and a magnetic transducer or read/write head assembly 24 radially displaced from the spindle 20 and being mounted for reciprocal movement along a linear path of travel that extends in a radial direction with respect to axis 22. Extending outwardly through an opening 26 in a side wall 28 of lower housing section 16 is the terminal edge portion 30 of a circuit board within housing 12. Edge portion 30 carries thereon an array of electrical contacts 32 for making electrical connections to various drive components including a spindle drive motor, a linear motor or actuator used for head positioning purposes, and the head assembly 24.

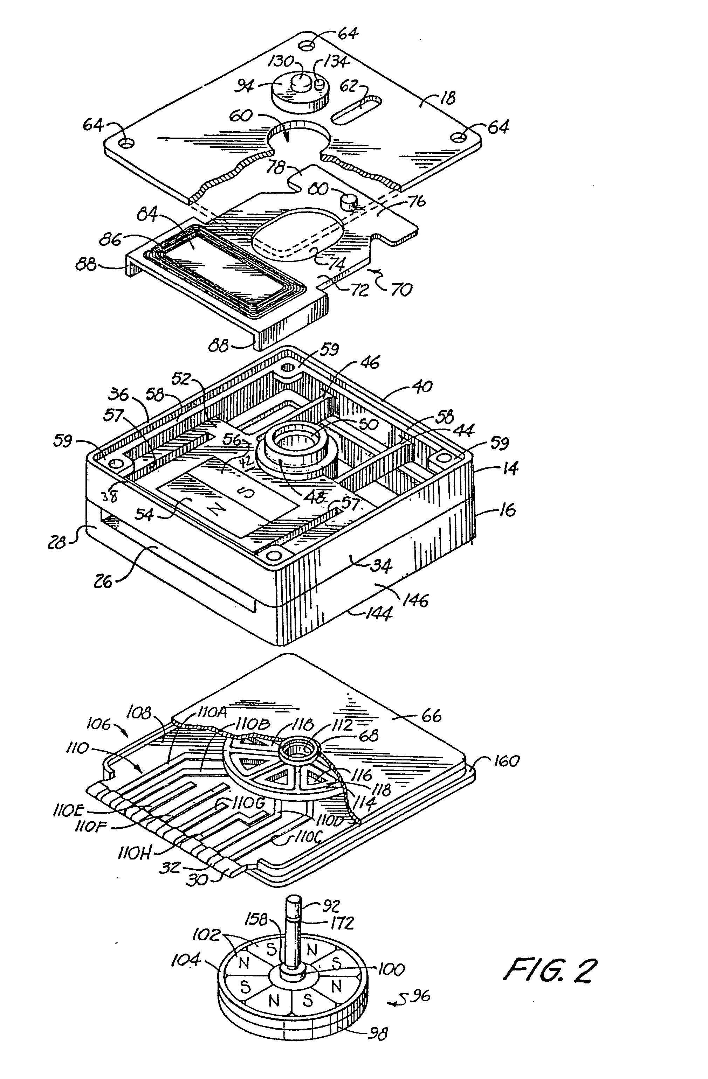

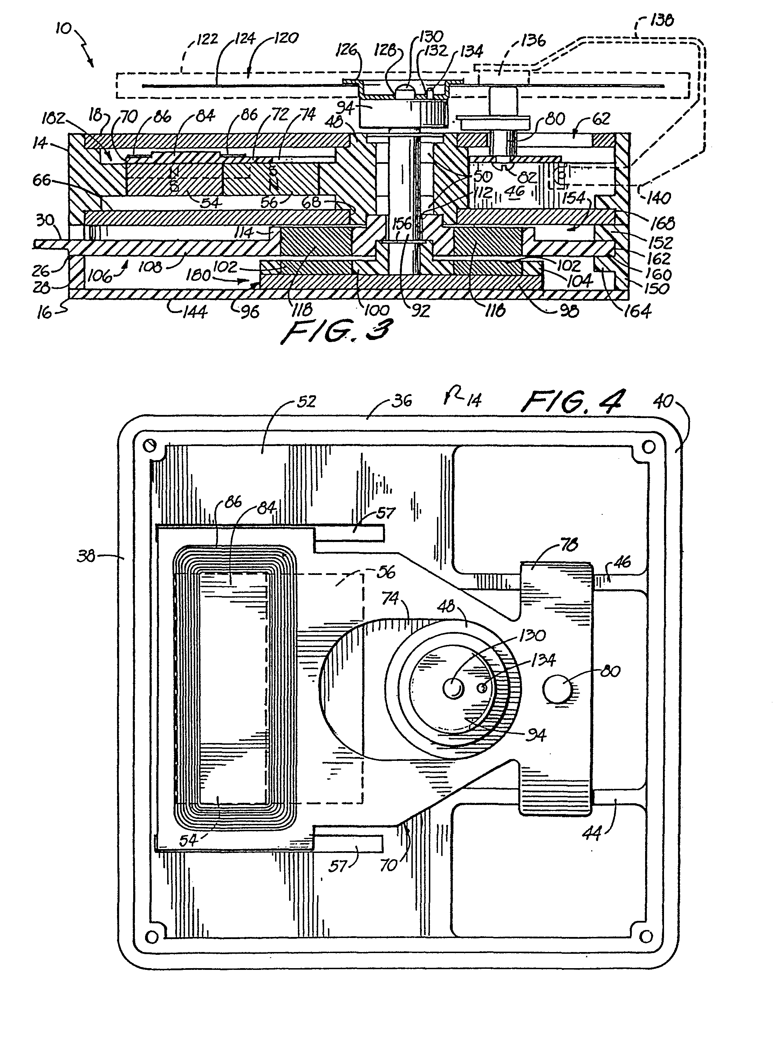

The major structural components of drive 10 are shown in exploded fashion in FIG. 2, and FIG. 3 shows a vertical cross section view of the assembled drive.

The upper housing section 14 serves as a component support frame and is defined by a peripheral section, formed by forward and rear walls 34 and 36 and a pair of side walls 38 and 40, a support member or cross bar 42 extending in the longitudinal direction between the inner surfaces of walls 34 and 36, and a pair of spaced apart parallel support members 44 and 46 extending in the lateral direction between the facing surfaces of member 42 and wall 40. Integrally formed with member 42 and extending outwardly from a midportion thereof on one side toward wall 40 into the space between members 44 and 46 is a rounded spindle support section 48 holding vertically disposed bearings 50 for rotatably mounting the spindle 20. Extending between the opposite side of support member 42 and wall 38 is a horizontal rectangular frame 52 which holds a pair of longitudinally extending permanent magnets 54 and 56. The magnets 54 and 56 are disposed in side by side relation with opposite polarity faces in coplanar relation. As will become apparent later, the magnets 54 and 56 form part of an electromagnetic linear actuator motor for driving head 24 along its linear path of travel. Between the longitudinal ends of the magnets 54 and 56 and the corresponding interior surfaces of walls 34 and 36, frame 52 is provided with a pair of laterally extending head carriage guide slots 57.

The upper housing section 14 is preferably of molded construction and may be formed of a light metal or high strength plastic material. In the illustrated embodiment, section 14 includes an interior depressed peripheral ledge 58 and integrally molded corner bosses or tabs 59 which serve as supports and attachment points for the cover plate 18. The lower housing section 16 supports the circuit board and also serves to enclose the rotor assembly of the spindle motor. It is preferably of molded plastic construction.

The top cover plate 18 is formed of a magnetically permeable material, such as soft steel or the like, and a portion thereof overlies the linear motor magnets 54 and 56 and serves as a flux return path and magnetic shielding component of the motor. As best shown in FIG. 2, cover plate 18 has a circular opening 60 for spindle 20 and an elongated radially extending slot 62 through which a mounting post for head 24 extends. Four corner holes 64 are provided for hold down screws that secure plate 18 to the tabs 59 in upper housing section 14.

On the underside of section 14 (See FIGS. 2 and 3) is a second magnetically permeable plate 66 having a spindle clearance hole 68 therein. The plate 66 serves as a common flux return path and magnetic shielding component for both the linear head positioning motor and the spindle motor. By having both motors share this single component, the overall height of the drive 10 is reduced significantly.

The head 24 is adapted to be mounted near one end of a nonmagnetic sliding component 70 that serves both as a head carriage and the moving element (armature) or bobbin of the linear actuator. Component 70 comprises a molded plastic elongated planar support 72 having an oblong shaped opening 74 therein through which the spindle 20 extends. To the right of opening 74 is a head mounting area 76 which includes a pair of laterally extending arms 78 that engage and ride on the uppermost surfaces of the support members 44 and 46 in upper housing section 14. Mounted in the center of area 76 is an upstanding head mounting post 80 that may be secured to member 72, from the underside, by a screw 82 (as shown on FIG. 3). The opposite bobbin end of member 72, remote from the head mounting area 76, includes an integrally formed upstanding rectangular pedestal 84 around which is wound a rectangular wire coil 86 of the linear motor. When current flows in coil 86 it interacts with the magnetic field provided by the magnets 54 and 56 to produce a translational force for driving component 70 longitudinally. By reversing the direction of current flow in coil 86 the direction of linear motion of component 70 is reversed. At the lateral edges of this coil supporting section, member 72 is provided with a pair of vertically depending guide legs 88 that extend down into the guide slots 57 in the magnet frame 52 to guide component 70 along its linear path of travel.

The spindle 20 comprises a spindle shaft 92, a spindle head 94 that is attachable to the top of shaft 92 and a spindle motor rotor assembly 96 attached to the bottom of shaft 92. The rotor assembly 96 comprises a horizontal circular magnetically permeable rotor plate 98 attached to shaft 92 by a collar 100 for rotation with shaft 92 about axis 22; and a circular array of eight sector-shaped permanent magnets 102 of alternating polarity mounted on the upper surface of rotor 98 and being retained thereon by a circumferential nonmagnetic retaining ring 104 secured to the periphery of rotor plate 98.

Positioned between the spindle rotor assembly 96 and the common plate 66 is a printed circuit board 106 formed in part by the previously noted terminal edge portion 30 having the linear array of contacts 32 thereon. The board 106 comprises an insulating nonmagnetic substrate 108 carrying theron a predetermined pattern of etched conductive leads 110 for connecting various electrical components in drive 10 to the contacts 32.

Board 106 has a circular spindle clearance opening 112 therein which is surrounded by an upstanding annular molded plastic nest 114 that is divided into eight separated pie-shaped compartments 116 for receiving and supporting eight corresponding sector-shaped spindle motor field coils 118. These coils 118 are interconnected for multiphase operation and may be selectively energized through conductors 110A-110D by a spindle motor power source in an external disc drive controller (not shown) connected to the terminal edge 30. The external controller also selectively energizes the linear head positioning motor through conductors 110E and 110F which may be connected to the coil 86 by interconnecting wires (not shown) and provides read/write data signals through conductors 110G and 110H which may be connected to the head assembly 24 by wires (not shown).

It should be understood that circuit board 106 may have additional electronic components and/or circuits mounted thereon. For example, it could include selective drive controller chips or even an entire highly integrated disc controller circuit.

The assembled drive 10, embodying the present invention, is shown in cross section in FIG. 3 with a small diameter (e.g. 47mm) flexible magnetic recording disk 120 in operative engagement with the spindle head 94. Disk 120 would normally be enclosed in a disk jacket 122, shown in dotted lines, supported in operative relation with spindle 20 by disk supporting and positioning structure (not shown) in the apparatus in which drive 10 is intended to be used. Owing to its compact size, drive 10 is suitable for use in small hand held or portable apparatus such as an electronic still imaging camera or small lap top or industrial computers.

The disk 120 includes a recording medium portion comprising a thin flexible annular support 124 coated on opposite sides with a magnetic recording layer. Support 124 is secured to a central metal hub, such as the illustrated hat-shaped hub 126, which is accessible through a central opening in jacket 122 and has a central opening 128 for receiving an axially aligned centering pin 130 projecting upwardly from the upper surface of spindle head 94 and a radially offset hole 132 for receiving an upstanding off axis drive pin 134 which also projects upwardly from spindle head 94 to the right of pin 130.

With the disk 120 so positioned, the read/write head 24 projects through a radially extending axis slot in jacket 122 to locate it in transducing relation with the recording layer on the under side of the recording medium component 124. In the illustrated embodiment, the disc 120 is configured for single sided recording wherein a pressure pad 136 extends through a radially extending slot on the opposite side of the jacket 122 and engages the opposite side of the recording medium in alignment with head 24. For double sided recording, the pressure pad 136 may be replaced with a second recording head (not shown).

The pressure pad 136 or second head may be mounted in the apparatus in which drive 10 is employed.

-11-

Alternatively, drive 10 may be provided with an optional C-shaped pad or head support arm 138 shown in dotted lines. Arm 138 may be pivotally connected at its lower end 140 to head supporting end of component 70 and extend out of an opening in the upper housing section side wall 40 for pivotal movement between its illustrated operative position and a disk removal position (not shown) where it is pivoted in a clockwise direction to move the pad or head on its upper end away from the disk to facilitate removal.

Drive 10 is designed for easy and economical modular assembly in that the appropriate components are added to the upper and lower housing sections 14 and 16 and then these two sections are joined together.

The lower housing section 16 comprises a bottom wall 144; and four peripheral walls including forward and rear walls 146 and 148, the previously noted side wall 28 having the circuit board opening 26 therein, and an opposite side wall 150. At the top of section 16, a horizontal flange portion 152 projects inwardly a short distance from the upper edges of the peripheral walls and defines the bounds of a large rectangular top opening 154.

The spindle shaft, having rotor assembly 96 attached thereto, is inserted through the spindle opening 112 in circuit board 106 from the underside thereof and a split ring washer 156 is pressed into a lower circular shaft recess 158 to prevent the spindle assembly from sliding back out through opening 112.

The board 106 is then inserted into section 16 through the top opening 154 and is maneuvered so that the terminal edge 30 extends out through slot 26 in side wall 28 then, the board 106 is moved horizontally to the right to insert its opposite edge 160 into an edge supporting channel 162 formed by flange 152, the inner surface of wall 150 and a lower flange 164 projecting inwardly from wall 150 below flange 152. The board 106 is then secured in this position with conventional fasteners (not shown).

To mount the components on the upper housing section 14, the carriage/bobbin component 70 is placed on the upper frame structure so that the guide legs 88 of the coil supporting end slide down into the guide channels in the magnet frame 52; and the arms 78 of the head mounting section 76 rest on support members 44 and 46, as best shown on FIG. 4. Thus, the underside of member 72 rests on a coplanar support surface defined by the uppermost surfaces of magnets 54 and 56, frame 52 and support members 42, 44 and 46. In this manner, component is mounted for reciprocating sliding motion in the longitudinal direction with the enlarged opening 74 in base member 72 providing clearance for the upper end of the spindle support 48 that projects upwardly through opening 74. Next, the top plate 18 is secured in its operative position spaced from an overlying component 70. When so located, the uppermost portion of the spindle support 48 fits into cover plate opening 60 and the head mounting post 80 projects upwardly through the elongated clearance slot 62.

The common flux return path and magnetic shielding plate 66 is placed on the underside of section 14 and is secured, by any conventional means, to a pair of L-shaped locating and supporting ledges 166 and 168 formed on the lower interior sides of side walls 38 and 40. When so located, the lower end of spindle support 48 fits into the circular opening 68 in plate 66.

In the final assembly operation, the upper and lower housing sections 14 and 16 are brought together and joined in superposed relation whereby the upper portion of the spindle shaft 92 extends through upper and lower ball bearings 50 mounted in support 48 and its uppermost

-13-

end projects upwardly beyond the cover plate 18. The spindle shaft 92 is raised until the lower split ring 156 engages the bottom of the lower bearing 50 thereby lifting the rotor section 96 clear of bottom wall 144. The spindle is secured in this position by inserting an upper split ring washer 170 into an upper circular recess 172 in shaft 92 that is positioned just above the upper surface of the top bearing 50. Preferably, a saddle-shaped compression spring washer (not shown) is positioned between the split ring washer 170 and the upper bearing surface to apply an axially directed load to the bearings and thereby minimize frictional forces therein in a manner that is well known in the art.

Thereafter, the spindle head 94 is secured to the top end of shaft 92 by means of a set screw or the like; and the head assembly 24 is attached to the upper end of the mounting post 80. Although not shown on the drawings, the mounting post 80 has electrical connectors therein for making the appropriate electrical connections to the read/write transducer in head assembly 24.

The spindle motor magnetic field circuit includes the magnetically permeable rotor 98, the circular array of alternating polarity permanent magnets 102, the magnetic fields generated by energizing the circular array of field coils 118 on a polyphase basis, and that portion of the common magnetically permeable common plate 66 overlying rotor 98.

The permanent magnets 102 establish a series of alternating magnetic fields by magnetic coupling with their opposite polarity next adjacent neighbors. The polyphase energization of coils 118 establishes a rotating magnetic field which interacts with the permanent magnetic fields and produces a torque force to spin the rotor 98 in a manner that is well known in the art.

Although not shown on the drawings, drive 10

-14-

may additionally include a Hall effect sensor, mounted on board 106 in facing relation to magnets 102 for detecting magnetic field transitions which is an indication of rotational speed. This information would be provided to the drive controller and used to maintain the desired rotational speed. For convenience, the spindle motor comprising the above described components will be designated motor 180. Motor 180 may be run at speeds in the range of approximately 300 - 3600 RPM and preferably is optimized to run at approximately 1200 RPM for high density recording on small diameter disks with fairly high data transfer rates.

The motor plate 98 and the common plate 66 serve both a flux return and magnetic shielding function in motor 180. That is, the outer fringes of the permanent magnet generated fields emanating from the upper side of the rotor pass through the nonmagnetic circuit board 106 and find a low reluctance return path in plate 66. The rotor 98 serves the same function on the underside of motor 180. Since an appreciable portion of the outer fringes of the fields are confined to the plates 98 and 66, these components also serve as magnetic shields. This substantially diminishes the strength of any stray fields which may eminate from motor 180 and thereby minimize the potential of such stray fields reaching the area of the head 24 and interfering with magnetic recording signal fields generated at the head gap.

The magnetic circuit of the linear head positioning motor, which for convenience is designated 182, comprises the magnetic field produced by the coupling of the side by side permanent magnets 54 and 56, the current carrying coil 86 on the bobbin end of component 70, that portion of the magnetically permeable common plate 66 under lying magnets 54 and 56, and that portion of the top plate 18 over lying the pair of magnets. As in the case of the spindle motor 180, the top and common plates 18 and 66 serve as flux return path components to increase motor efficiency as well as magnetic shielding components to minimize stray fields which may eminate from motor 182 and potentially interfere with the magnetic signal fields produced at the gap of head 24.

As noted earlier, when current flows in coil 86, which is located in the magnetic field produced by the magnets 54 and 56, a reactive force is generated and acts to move the coil 86 linearly (to the right or left in FIG. 3 depending on current direction) with respect to the magnets thereby advancing the head carrying component 70 along its linear path of travel. It is the current in the long legs of the coil 86 that produce this lateral thrust in the radial direction because each long leg of the coil 86 is interacting with a permanent magnet of opposite polarity.

In addition to the magnetic shielding provided by top plate 18 and common plate 86, potential interference with head operation from stray fields eminating from motor 182 is minimized by the structure of drive 10 which spaces the head 24 as far away as practical from the magnets 54 and 56 by locating the head and magnets on opposite sides of the spindle. This beneficial spacing of the head 24 from its propulsive electromagnetic actuator 182 is accomplished by employing the elongated component 70 which advantageously has an elongated opening 74 therein that permits the spindle 20 to extend up through the carriage structure without the spindle inhibiting linear motion of this component.

In the illustrated embodiment, the head carriage and at least the bobbin portion of the linear actuator are joined in a single integrated structure, that is component 70. However, it should be understood that it is within the spirit and scope of the present invention

-16-

to provide a drive which has a separate head positioning actuator or motor and a separate means for connecting the drive motor to the transducer and for locating the transducer or head on the opposite side of the spindle to minimize interference from stray fields emanating from the head positioning motor.

Although the illustrated drive 10 is configured for magnetic recording on a flexible magnetic disk, it should be understood that the structure and arrangements of components of drive 10 may be applied to other types of disk drives that are configured for use with other types of disks such as optical or magneto-optical disks. The remote spacing of optical signal detectors or other types of electronic or electro-optical transducing components from the electromagnetic motor that moves these components relative to the disk will provide the same benefit of reducing the potential of interference with data or control signal from magnet fields emanating from the motor. The use of the common plate 66 would also be beneficial in reducing the overall size or volume of the other types of disk drives.

Because certain other changes and modifictions may be made without departing from the spirit and scope of the compact drive embodying the present invention, it is intended that all matter contained in the above description and the accompanying drawings be interpreted as illustrative and not in the limiting sense.

What is claimed is:

1. A compact disk drive, comprising:

means for supporting various components of said drive;

a spindle on said supporting means for spinning a disk in engagement therewith about an axis;

a read and/or write transducer configured to be moved in a direction substantially perpendicular to said axis along a path of travel extending radially with respect to the disk;

means, including an electromagnetic motor, for driving said transducer along its said path of travel, said driving means being mounted on said supporting means to one side of said spindle, and

means for connecting said driving means to said transducer and for locating said transducer on an opposite side of said spindle where said transducer is remote from said motor to minimize interference from magnetic fields emanating from said motor.

2. The disk drive of claim 1 wherein said transducer is diametrically opposite said motor.

3. The disk drive of claim 1 wherein said connecting and locating means includes a movable carriage member having said transducer mounted adjacent one end thereof, and said carriage member includes an elongated clearance opening therein through which said spindle extends so that movement of said carriage is not inhibited by said spindle.

4. The disk drive of claim 3 wherein said motor is a linear motor.

5. The disk drive of claim 4 wherein said motor includes an armature coil mounted on said carriage adjacent and end thereof opposite said one end.

6. The disk drive of claim 4 wherein said motor includes at least two permanent magnets of opposite polarity mounted on said supporting means and said carriage means has an armature coil of said motor mounted thereon.

7. The disk drive of claim 1 further including a pressure pad for urging the disk into transducing relation with said transducer.

8. The compact disk drive of any of claims 1 - 7, comprising:

a magnetically permeable member;

a first electromagnetic motor, formed in part by another portion of said member, for rotatably driving a disk, and

a second electromagnetic motor, formed in part by a portion of said member, for driving a transducer along a radially extending path of travel relative to the disk.

9. The disk drive of claim 8 wherein said magnetically permeable member serves as a flux retun path component of both said first and second motors.

10. The disk drive of claim 9 wherein said disk drive further includes a read and/or write transducer and said magnetically permeable member serves as a magnetic shielding component to reduce interference with said transducer from magnetic fields emanating from said first and second motors.

11. The disk drive of claim 8 wherein said magnetically permeable member is a common plate disposed between magnetic components of said first and second motors.

12. The disk drive of claim 8 wherein said second motor is a linear motor.

0243973

FIG. 1

FIG. 2

2/3

0243973

0243973

FIG.3

FIG.4